# EUROPEAN PATENT SPECIFICATION

(11) **EP 2 829 853 B1**
(45) Date of publication and mention of the grant of the patent: **04.09.2019**
(21) Application number: 12871672.7
(22) Date of filing: 07.11.2012
(51) Int. Cl.: G01G 13/06

(54) **WEIGHING DEVICE**
WIEGEVORRICHTUNG
DISPOSITIF DE PESÉE

(30) Priority: 19.03.2012 JP 2012061531
(43) Date of publication of application: 28.01.2015
(73) Proprietor: Yamato Scale Co., Ltd., Akashi-shi, Hyogo 673-0849 (JP)
(72) Inventor: KAWANISHI, Shozo, Akashi-shi, Hyogo 673-0849 (JP); OKUNOSONO, Akinari, Akashi-shi, Hyogo 673-0849 (JP); TSURUOKA, Masatomi, Akashi-shi, Hyogo 673-0849 (JP); KISHIMOTO, Hirotsugu, Akashi-shi, Hyogo 673-0849 (JP)
(74) Representative: Whitlock, Holly Elizabeth Ann
(86) International application number: PCT/JP2012/007132
(87) International publication number: WO 2013/140478

(56) References cited:
- EP-A1- 1 715 309
- JP-A- H0 325 323
- JP-A- S5 956 119
- JP-A- S63 127 124
- JP-A- 2001 304 947
- JP-A- 2003 130 718
- JP-A- 2011 112 412

## Description

### Technical Field

The present invention relates to a weighing apparatus which weighs objects such as powdered products (detergent, fertilizer, etc.), or granular products (resin pellets, cereal, feeding stuff, etc.) and supplies the weighed objects to bags, or the like.

### Background Art

As a conventional apparatus which charges objects comprising powdered products or granular products to containers such as bags, there is a weighing apparatus called a packer scale.

As such a weighing apparatus, for example, there is a weighing apparatus comprising a supply device which includes a cut gate, and a weighing hopper (scale hopper) which is supported by, for example, a load cell and supplied with objects from the supply device (see, e.g., Patent Literatures 1 to 3). This weighing apparatus includes the cut gate for opening and closing an opening at a lower end of a tubular body, which is filled with the objects. By opening the cut gate, the objects are dropped from the tubular body and supplied to the weighing hopper. At this time, the opening and closing operation of the cut gate is controlled so that the objects of a preset target weight value are supplied to the weighing hopper. Then, the weighing hopper weighs the supplied objects to obtain its final weight and then discharges the objects to the container such as the bag.

Also Document EP 1 715 309 discloses a weighing apparatus which includes a cut gate for opening and closing an opening at a lower end of a tubular body.

### Citation List

### Patent Literature

Patent Literature 1: Japanese Laid-Open Patent Application Publication No. Sho 55-113914
Patent Literature 2: Japanese Laid-Open Patent Application Publication No. 2004-85282
Patent Literature 3: Japanese Laid-Open Patent Application Publication No. 2011-112412

### Summary of Invention

### Technical Problem

As a conventional example of the above stated weighing apparatus, there is a weighing apparatus which is configured to perform an operation corresponding to a selected kind of the objects. However, this weighing apparatus is configured not to perform a different operation in a case where the objects of the same kind has the same target weight value.

However, even in the case where the objects of the same kind has the same target weight value, there exist various cases according to the intention of a user who uses the weighing apparatus. For example, the user wishes to cause the weighing apparatus to perform a high-speed operation or an operation with a high weighing accuracy.

The present invention has been developed under the above stated circumstances, and an object of the present invention is to provide a weighing apparatus which is capable of easily performing an operation with a different ability even in the case where the objects of the same kind has the same target weight value.

### Solution to Problem

To achieve the above object, according to an aspect of the present invention, there is provided a weighing apparatus comprising: a supply means including a tubular body which extends vertically and is filled with objects comprising powdered or granular products, and a pair of cut gates which are used to open and close an opening at a lower end of the tubular body and rotate in opposite directions when the pair of cut gates are opened and closed, the supply means being configured to drop the objects filled in the tubular body by their own weight from a supply port defined by the pair of cut gates and the opening, when opening the pair of cut gates; a weighing means which is supplied with the objects dropped from the supply means and weighs the supplied objects; and a control unit for controlling opening and closing operation of the pair of cut gates based on a weight of the objects weighed by the weighing means so that the objects of a preset target weight value are supplied from the supply means to the weighing means; wherein the control unit has a plurality of operation modes including a first mode and a second mode for the objects of the same kind, the opening and closing operation of the pair of cut gates for supplying the objects of the target weight value from the supply means to the weighing means being made different among the plurality of operation modes; the control unit is configured to control the opening and closing operation of the pair of cut gates based on the operation mode selected from among the plurality of operation modes; and the control unit is configured to control the opening and closing operation of the pair of cut gates such that supply operation time which is time from when the pair of cut gates start to open to supply the objects of the target weight value from the supply means to the weighing means until the pair of cut gates are completely closed, is shorter when the second mode is selected than when the first mode is selected.

In accordance with this configuration, the control unit has the plurality of operation modes for the objects of the same kind, and the plurality of operation modes include the first mode (e.g., standard mode) and the second mode (e.g., high-speed mode) which is shorter in supply operation time than the first mode. Therefore, the weighing apparatus is able to easily perform an operation with a different ability in a case where the objects of the same kind has the same target weight value. For example, in a case where it becomes necessary to increase a processing speed in a state in which the weighing apparatus is normally operated in the first mode, the weighing apparatus can be operated in the second mode.

The control unit may be configured to control the opening and closing operation of the pair of cut gates such that each of the operation modes has: a large-amount supply period for which the pair of cut gates are opened with a large opening degree such that a size of the supply port of the supply means is a first predetermined size and a state in which the cut gates are opened with the large opening degree is maintained, for a specified time, when the supply means starts to supply the objects to the weighing means; a supply-amount gradual decrease period which is subsequent to the large-amount supply period and for which the pair of cut gates are gradually moved so as to be closed with an increase in the weight of the objects weighed by the weighing means, until the size of the supply port of the supply means is changed from the first size to a second predetermined size which is smaller than the first size; and a small-amount supply period which is subsequent to the supply-amount gradual decrease period and for which a state in which the pair of cut gates are opened with a small opening degree such that the size of the supply port of the supply means is the second size, is maintained for a specified time, and the pair of cut gates are closed when the weight of the objects weighed by the weighing means matches a predetermined supply stop weight value which is smaller than the target weight value; and the control unit may be configured to control the opening and closing operation of the pair of cut gates such that the size of the supply port is larger for the large-amount supply period, when the second mode is selected than when the first mode is selected.

In accordance with this configuration, since the control unit is configured to control the opening and closing operation of the pair of cut gates such that the size of the supply port is made larger for the large-amount supply period, in the second mode than in the first mode, the supply operation time can be easily made shorter in the second mode than in the first mode.

The plurality of operation modes may include a third mode; and the control unit may be configured to control the opening and closing operation of the pair of cut gates such that the size of the supply port is smaller for the small-amount supply period, and time taken for the small-amount supply period is longer, when the third mode is selected than when the first mode is selected.

In accordance with this configuration, the size of the supply port is made smaller for the small-amount supply period, and time taken for the small-amount supply period is made longer, in the third mode (e.g., high-accuracy mode) than in the first mode (e.g., standard mode). Therefore, the supply flow rate in a final stage of the supply of the objects can be made smaller, and the weighing accuracy can be made higher, in the third mode than in the first mode.

A front edge of at least one of the pair of cut gates in a closing direction may be provided with a hollow portion formed by cutting, the hollow portion having a width which is decreased from the front edge, as the hollow portion extends in a direction opposite to the closing direction.

By providing the above stated hollow portion in the cut gate, the supply flow rate of the objects supplied from the supply means to the weighing means in a final stage (e.g., small-amount supply period) can easily reach a desired flow rate.

The hollow portion may be configured such that its width is decreased from a width which is substantially equal to a width of the opening at the lower end of the tubular body in a direction perpendicular to the closing direction, as the hollow portion extends in the direction opposite to the closing direction.

In accordance with this configuration, since the hollow portion is configured to have the width which is decreased from the width which is substantially equal to the width of the opening at the lower end of the tubular body, in the direction perpendicular to the closing direction, as the hollow portion extends in the direction opposite to the closing direction, the pair of cut gates can smoothly perform the operation (e.g., operation in supply-amount gradual decrease period) from a large opening degree to a small opening degree.

The weighing apparatus may further comprise: a mode selecting operation means which is operated to select the operation mode from among the plurality of operation modes; and the control unit may be configured to control the opening and closing operation of the pair of cut gates based on the operation mode selected by the mode selecting operation means.

In accordance with this configuration, since a user who uses the weighing apparatus can select a desired operation mode from among the plurality of operation modes by using the mode selecting operation means, the desired operation mode can be easily selected.

### Advantageous Effects of Invention

The present invention is configured as described above, and has advantages that it becomes possible to provide a weighing apparatus which is capable of easily performing an operation with a different ability even in the case where the objects of the same kind has the same target weight value.

A conventional weighing apparatus called a packer scale mainly uses one cut gate. In the case of using one cut gate, the time required for the opening and closing operation when the opening operation or the like is performed cannot be reduced. Thus, there is a limit on improvement of a processing ability (processing speed). In contrast, in the present invention, by using the pair of (two) cut gates which rotate in the opposite directions, a distance for which each of the cut gates is moved to perform the opening and closing operation can be about 1/2 of a distance for which one cut gate is moved to perform the opening and closing operation in the case of using one cut gate. This can reduce the time required for the opening and closing operation, and reduce the supply operation time required for supplying the objects once. As a result, the processing ability can be made approximately twice or more than twice.

Moreover, in a case where the amount of the objects supplied from the supply means to the weighing means is controlled to reach the target weight value merely by adjusting the opening degree of one cut gate, there is a limit on improvement of the weighing accuracy. In contrast, in the present invention, by providing the hollow portion in at least one of the pair of cut gates to decrease the supply flow rate of the objects in a quadratic curve, the effect of gradually decreasing the supply flow rate of the objects is attained, and a high weighing accuracy is achieved, even when the cut gates are shifted from the open state to the closed state in a short time.

As described above, since the pair of cut gates which rotate in the opposite directions are used, and the hollow portion is provided in at least one of these cut gates to decrease the supply flow rate of the objects in a quadratic curve, the processing ability and the weighing accuracy can be improved. As a result, a higher processing ability and a higher accuracy can be realized.

The above and further objects, features and advantages of the present invention will more fully be apparent from the following detailed description with accompanying drawings.

### Brief Description of Drawings

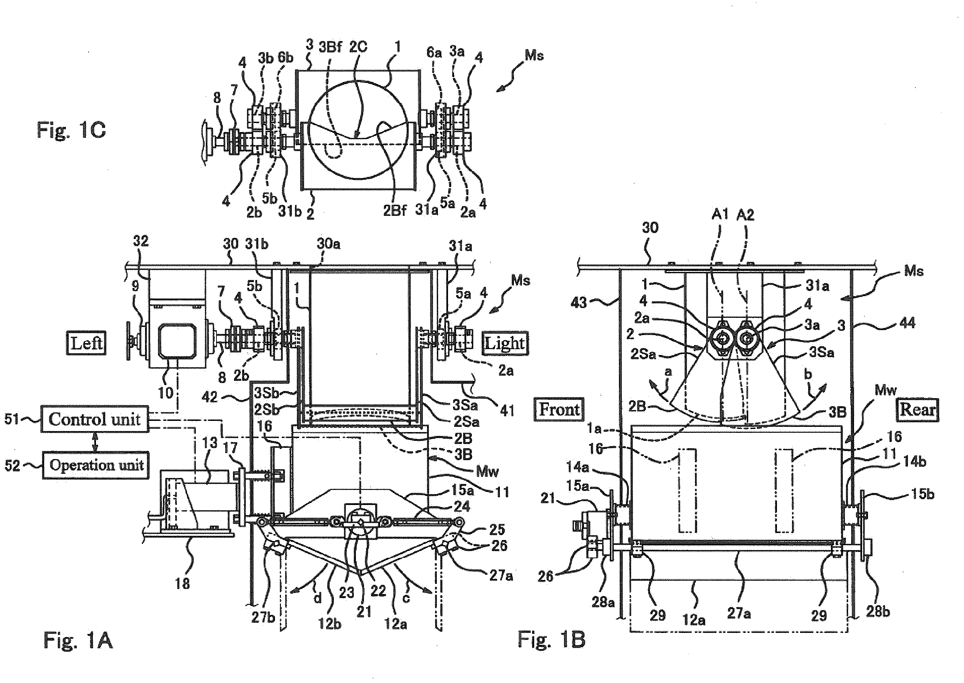

Fig. 1A is a schematic view of an exemplary configuration of a weighing apparatus according to an embodiment of the present invention, when viewed from a front, Fig. 1B is a schematic view of the weighing apparatus when viewed from a side, and Fig. 1C is a schematic plan view of major components of a supply device of the weighing apparatus, when viewed from above.

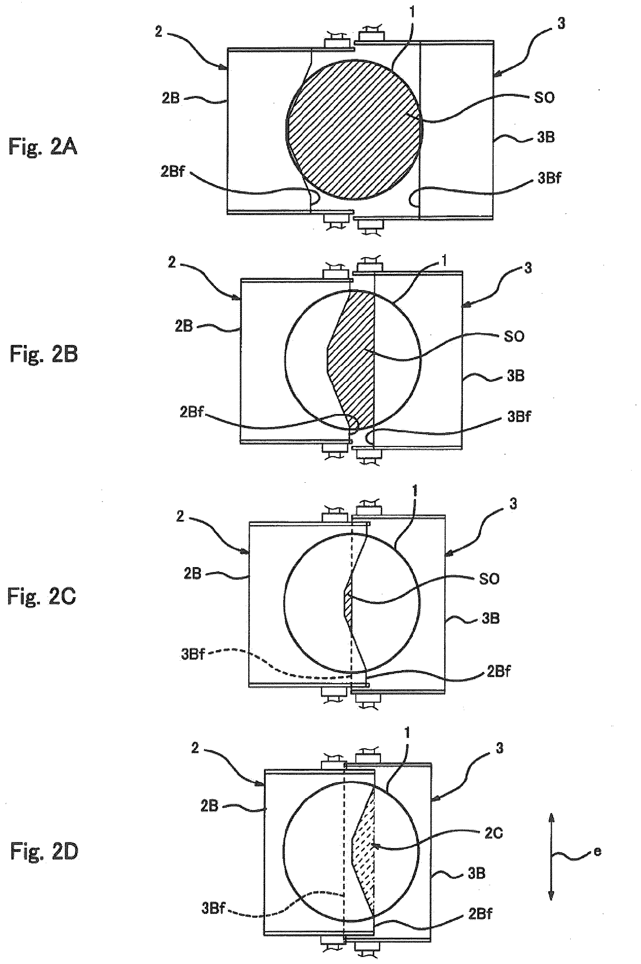

Figs. 2A to 2D are views showing different open/close states of cut gates, respectively, when viewed from above.

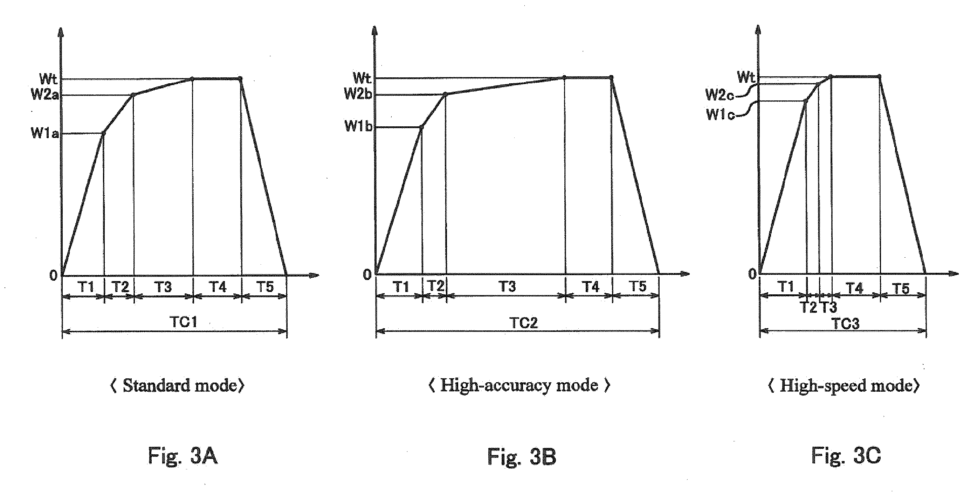

Figs. 3A, 3B, and 3C are schematic views showing exemplary shifting of the amount of objects filled in a weighing hopper in a standard mode of the weighing apparatus, exemplary shifting of the amount of objects filled in the weighing hopper in a high-accuracy mode of the weighing apparatus, and exemplary shifting of the amount of objects filled in the weighing hopper in a high-speed mode of the weighing apparatus, respectively.

### Description of Embodiments

Hereinafter, a preferred embodiment of the present invention will be described with reference to the drawings. Throughout the drawings, the same or corresponding components are identified by the same reference symbols and will not be described in repetition. The present invention is not limited to the embodiment described below. Numeric values illustrated below (e.g., opening degree θ, first and second predetermined weight values W1, W2, supply stop weight value W3, etc.) are merely exemplary, and other numeric values may be used.

### (Embodiment)

Fig. 1A is a schematic view of an exemplary configuration of a weighing apparatus according to an embodiment of the present invention, when viewed from a front, Fig. 1B is a schematic view of the weighing apparatus when viewed from a side, and Fig. 1C is a schematic plan view of major components of a supply device (Ms) of the weighing apparatus, when viewed from above. Hereinafter, for easier understanding of the description, for example, "left", "right", "front" and "rear" are determined as shown in Figs. 1A and 1B.

This weighing apparatus includes the supply device Ms for supplying objects to a weighing hopper (scale hopper) Mw, the weighing hopper Mw which holds the supplied objects for a specified time and then discharges the objects downward, a load cell 13 for supporting the weighing hopper Mw, a control unit 51, and an operation unit 52. Below the supply device Ms, the weighing hopper Mw which weighs the objects supplied from the supply device Ms and discharges the weighed objects is placed. The load cell 13 weighs the objects inside the weighing hopper Mw. The objects are powdered products (detergent, fertilizer, etc.), granular products (resin pellets, cereal, feeding stuff, etc.), or the like. In addition, in the present example, dust-proof separating walls 41 to 44 are suitably provided.

The supply device Ms includes a cylindrical tubular body 1 extending vertically (upward or downward direction), a pair of cut gates 2, 3 for opening and closing an opening la at the lower end of the tubular body 1, a servo motor (e.g., AC servo motor) 10 for actuating the pair of cut gates 2, 3 to open and close the gates 2, 3, via a gear box 9 or the like, and other components.

The upper end portion of the tubular body 1 is fastened to a horizontal plate 30. The horizontal plate 30 is provided with a circular opening 30a corresponding to the opening at the upper end of the tubular body 1. The objects supplied via the opening 30a of the horizontal plate 30 are filled into the tubular body 1.

The pair of cut gates 2, 3 are able to open and close the opening 1a at the lower end of the tubular body 1. The opening 1a at the lower end of the tubular body 1 has a shape conforming to the shape of the cut gates 2, 3 in a closed state so that the objects do not spill out. When the cut gates 2, 3 are opened, the objects filled in the tubular body 1 are dropped successively from the opening 1a at the lower end. When the cut gates 2, 3 are closed, the opening 1a at the lower end is closed in such a way that a flow of the objects being dropped successively is cut off from both sides.

The cut gate 2 includes a bottom portion 2B with a circular-arc cross-section in a forward or rearward direction, a side plate portion 2Sa which extends upward from the right edge of the bottom portion 2B and is connected to one end of a shaft 2a (hereinafter will also be referred to as "right shaft 2a"), and a side plate portion 2Sb which extends upward from the left edge of the bottom portion 2B and is connected to one end of a shaft 2b (hereinafter will also be referred to as "left shaft 2b"). The shafts 2a, 2b are placed on a common first horizontal axis and are rotatably supported by bearing units 5a, 5b comprising bearings, respectively.

Likewise, the cut gate 3 includes a bottom portion 3B with a circular-arc cross-section in the forward or rearward direction, a side plate portion 3Sa which is connected to the right edge of the bottom portion 3B, extends upward and is connected to one end of a shaft 3a (hereinafter will also be referred to as "right shaft 3a"), and a side plate portion 3Sb which is connected to the left edge of the bottom portion 3B, extends upward and is connected to one end of a shaft 3b (hereinafter will also be referred to as "left shaft 3b"). The shafts 3a, 3b are placed on a second horizontal axis which is parallel to the above stated first horizontal axis and are rotatably supported by bearing units 6a, 6b comprising bearings, respectively.

The right shaft 2a of the cut gate 2 and the right shaft 3a of the cut gate 3 are attached with gears 4,4, respectively such that the gears 4,4 are in mesh with each other. The gears 4,4 allow the right shaft 2a of the cut gate 2 and the right shaft 3a of the cut gate 3 to be rotatable in opposite directions. Likewise, the left shaft 2b of the cut gate 2 and the left shaft 3b of the cut gate 3 are attached with gears 4,4, respectively such that the gears 4,4 are in mesh with each other. The gears 4,4 allow the left shaft 2b of the cut gate 2 and the left shaft 3b of the cut gate 3 to be rotatable in opposite directions.

The left shaft 2b of the cut gate 2 is extended leftward from the gear 4 and connected to a drive shaft 8 via a coupling 7. Although in the present example, the shaft 2b is connected to the drive shaft 8, any one of the four shafts 2a, 2b, 3a, 3b may be connected to the drive shaft 8. In addition, although in the present example, the drive shaft 8 is connected to the servo motor 10 via the gear box 9, it may be directly connected to a motor shaft of the servo motor 10.

The two right bearing units 5a, 6a are mounted to a bracket 31a fastened to the lower surface of the horizontal plate 30, while the two left bearing units 5b, 6b are mounted to a bracket 31b fastened to the lower surface of the horizontal plate 30. The gear box 9 and the servo motor 10 are fastened to the lower surface of the horizontal plate 30 via a mounting member 32.

In the above described configuration, for example, when the drive shaft 8 rotates in a predetermined direction, in a state in which the cut gates 2, 3 are closed, the left shaft 2b of the cut gate 2 rotates, and the right shaft 2a of the cut gate 2 rotates to a right (clockwise) in Fig. 1B. Thereby, the cut gate 2 rotates in a direction of an arrow a and is opened. At the same time, the left shaft 3b of the cut gate 3 rotates, and the right shaft 3a of the cut gate 3 rotates to a left (counterclockwise) in Fig. 1B. Thereby, the cut gate 3 rotates in a direction of an arrow b and is opened. When the cut gates 2, 3 are closed, the drive shaft 8 rotates in a direction opposite to the direction in the above case, and thereby a reversed operation is performed. A control unit 51 controls the servo motor 10 so that the cut gates 2, 3 are opened or closed, and in response to this, the drive shaft 8 is actuated.

Specifically, the cut gates 2, 3 are pivoted such that their bottom portions 2B, 3B draw circular-arc shapes, respectively. When the cut gates 2, 3 are moved from their open state to their closed state, the two bottom portions 2B, 3B cut off the flow of the objects dropped by their own weight from inside of the tubular body 1, from both sides, and close the opening 1a at the lower end of the tubular body 1 (the opening 1a at the lower end is covered). For example, as shown in Fig. 1B, in a state in which the cut gates 2, 3 are closed (fully closed state), the front end portions of the bottom portions 2B, 3B of the cut gates 2, 3 in a closing direction (direction opposite to the arrows a, b) overlap with each other, and the opening 1a at the lower end of the tubular body 1 is closed. Therefore, the objects are not discharged from the tubular body 1.

For example, as shown in Fig. 1C, the bottom portion 2B of the cut gate 2 is provided with a hollow portion 2C formed by cutting so as to have a width which is decreased from a front edge 2Bf in the closing direction, as it extends in the direction opposite to the closing direction. The hollow portion 2C is formed by cutting out a portion hatched by broken lines in Fig. 2D. The hollow portion 2C is configured such that its width is gradually decreased from a width which is substantially equal to the width (inner diameter of the tubular body 1) of the opening 1a at the lower end of the tubular body 1, as it extends in the direction opposite to the closing direction of the cut gate 2. The width of the hollow portion 2C and the width of the opening 1a at the lower end are dimensions in a direction (direction of arrow e) which is perpendicular to the direction in which the cut gate 2 is opened and closed. The width of the hollow portion 2C corresponds to, for example, the length of the portion hatched by broken lines, in the direction of the arrow e in Fig. 2D.

In the present example, in contrast, a front edge 3Bf of the bottom portion 3B of the cut gate 3 is linear, and is not provided with a hollow portion. The pair of cut gates 2, 3 are fully (completely) closed in a state in which the front edges 2Bf, 3Bf and portions in the vicinity of the front edges 2Bf, 3Bf overlap with each other. Alternatively, the cut gate 3 may be provided with a hollow portion, which is similar to the hollow portion 2C of the cut gate 2.

Figs. 2A to 2D are views showing different open/close states of the cut gates 2, 3, respectively, when viewed from above. Fig. 2A exemplarily shows a state in which the objects of a large amount are supplied. Fig. 2B exemplarily shows a state in which the supply amount of the objects is decreased gradually. Fig. 2C exemplarily shows a state in which the objects of a small amount are supplied. Fig. 2D exemplarily shows a fully (completely) closed state (supply stop state).

In Figs. 2A, 2B, and 2C, each of regions hatched by solid lines is a discharge outlet through which the objects are dropped and discharged by their own weight from the tubular body 1, i.e., supply port SO which is defined by the cut gates 2, 3, and the opening 1a at the lower end of the tubular body 1. The supply port SO of the supply device Ms is formed by a region within the opening 1a at the lower end of the tubular body 1, which region is sandwiched between the cut gate 2 and the cut gate 3, in a state in which the cut gates 2, 3 are opened with a large opening degree or are not fully closed. In the states of Fig. 2A, 2B, and 2C, the objects are dropped by their own weight from the tubular body 1, through the supply port SO, and supplied to the weighing hopper Mw.

When the objects are discharged, for example, in the fully closed state of Fig. 2D, initially, the pair of cut gates 2, 3 maintain a state in which the cut gates 2, 3 are opened with a large opening degree to supply the objects of a large amount, as shown in Fig. 2A. Then, at a specified timing, the pair of cut gates 2, 3 enter a state (e.g., state of Fig. 2B) in which the cut gates 2, 3 are moved gradually in the closing direction of the gates 2, 3 to gradually decrease the supply amount of the objects, and goes through this state. Then, as shown in Fig. 2C, the cut gates 2, 3 enter a state in which they are opened with a small opening degree. Then, at a specified timing, the cut gates 2, 3 are fully closed, and enters the fully closed state of Fig. 2D.

Below the cut gates 2, 3 of the supply device Ms, the weighing hopper Mw is placed to receive the objects discharged from the supply device Ms (tubular body 1). The weighing hopper Mw is configured to hold the objects supplied from the tubular body 1 for a specified time, weigh the objects (measure the weight of the objects), and then discharge the weighed objects downward. The objects discharged from the weighing hopper Mw are supplied to, for example, a packaging machine (not shown) and charged into a bag.

The weighing hopper Mw includes a hopper body 11 of a tubular shape with a rectangular cross-section when viewed from above, a pair of discharge gates 12a, 12b for opening and closing the opening at the lower end of the hopper body 11, a rotary actuator 21 for causing the discharge gates 12a, 12b to perform opening and closing operation, etc..

Mounting plate connecting sections 14a, 14b are fastened to the outer sides of the front and rear side walls of the hopper body 11, respectively, by suitable fastening means. Mounting plates 15a, 15b are fastened to the mounting plate connecting sections 14a, 14b, respectively, by suitable fastening means.

Each of the pair of discharge gates 12a, 12b includes a rectangular plate member. The pair of discharge gates 12a, 12b are fastened to first and second gate rotary shafts 27a, 27b, respectively, by suitable fastening means 29 and coupled to the rotary actuator 21 via link members using known toggle mechanisms, respectively. Specifically, the right first gate rotary shaft 27a is rotatably supported at both end portions by two bearing units (bearings) 28a, 28b mounted to specified positions of the front and rear mounting plates 15a, 15b, respectively. Likewise, the left second gate rotary shaft 27b is rotatably supported at both end portions by two bearing units (bearings) mounted to specified positions of the front and rear mounting plates 15a, 15b, respectively.

The rotary actuator 21 is fastened to the front mounting plate 15a. The center portion of an arm member 23 is fastened to a rotary shaft 22 of the rotary actuator 21. One ends of connecting rods 24 are attached to both end portions of the arm member 23, respectively. The upper ends of connecting members 25 are attached to the other ends of the connecting rods 24, respectively such that the connecting members 25 are rotatable. A pair of retaining members 26 are fastened to the lower end of each of the connecting members 25 to retain the first or second gate rotary shaft 27a, 27b by, for example, bolts (not shown). In the present embodiment, each of the connecting members 25 is integrated with the upper retaining member 26, of the pair of retaining members 26.

In the above described configuration, when the rotary shaft 22 of the rotary actuator 21 rotates to, for example, a left with a specified angle in the state in which the discharge gates 12a, 12b are closed, the gate rotary shafts 27a, 27b rotate via the link members, respectively. Thereby, the discharge gates 12a, 12b rotate in the directions of the arrows c, d, respectively, and are opened. When the discharge gates 12a, 12b are closed, a reversed operation is performed. The rotary actuator 21 is controlled by the control unit 51.

Two load cell connecting members 16 are fastened to the left side wall of the hopper body 11. A load cell mounting plate 17 is fastened to the two load cell connecting members 16 by means of a suitable fastening means. One end of the load cell 13 is fastened to the left side surface of the load cell mounting plate 17. The other end of the load cell 13 is fastened to a load cell mounting base 18 by means of a suitable fastening means. That is, the weighing hopper Mw is supported by the load cell 13. An output signal of the load cell 13 is input to the control unit 51.

The control unit 51 is constituted by, for example, a microcontroller, etc., and includes a CPU and a memory such as RAM and ROM. The control unit 51 controls the overall weighing apparatus in such a manner that the CPU executes programs stored in the memory. It should be noted that the control unit 51 may be a single controller configured to perform centralized control or a plurality of controllers configured to cooperate with each other to perform distributed control.

The control unit 51 receives as an input a signal output from the load cell 13 supporting the weighing hopper Mw through a known signal processing circuit (amplifier, A/D converter, or the like; not shown). Based on this output signal, the control unit 51 calculates the weight of the objects held in the weighing hopper Mw. The control unit 51, the weighing hopper Mw, and the load cell 13 constitute a weighing means.

The control unit 51 controls the servo motor 10 via a drive circuit (not shown), thereby controlling the opening and closing operation of the cut gates 2, 3 (i.e., controls the supply device Ms). In addition, the control unit 51 controls the rotary actuator 21 via a drive circuit (not shown), thereby controlling the opening and closing operation of the discharge gates 12a, 12b of the weighing hopper Mw. Furthermore, the control unit 51 receives as an input a signal output from the operation unit 52 and outputs a signal of data or the like to be displayed on the operation unit 52.

The operation unit 52 includes a display (display device) for displaying, for example, a weight value, etc., and a command input means used to, for example, command the weighing apparatus to start and stop running, and select the operation mode.

Hereinafter, the exemplary operation of the above configured weighing apparatus will be described.

During running of the weighing apparatus, constantly, the control unit 51 takes in the signal output from the load cell 13 at specified time intervals (e.g., 10ms) and calculates the weight (hereinafter will also be referred to as a "filling amount") of the objects held in the weighing hopper Mw, based on the output signal.

This weighing apparatus has three operation modes which are a standard mode, a high-accuracy mode, and a high-speed mode, as the operation modes. For example, the operation unit 52 is provided with mode selection buttons (mode selecting operation means) corresponding to the three operation modes, respectively. A user can set a desired operation mode by pushing one of the mode selection buttons. Alternatively, one mode selection button may be provided, and the operation mode may be switched successively among the three operation modes, every time the user pushes the mode selection button. The mode selecting operation means is not limited to the mode selection button so long as one desired operation mode can be selected from among the three operation modes, by the user's operation of the operation unit 52.

Figs. 3A, 3B, and 3C are schematic views showing exemplary shifting of the amount of the objects filled in the weighing hopper Mw in the standard mode of the weighing apparatus, exemplary shifting of the amount of the objects filled in the weighing hopper Mw in the high-accuracy mode of the weighing apparatus, and exemplary shifting of the amount of the objects filled in the weighing hopper Mw in the high-speed mode of the weighing apparatus, respectively. In Figs. 3A, 3B, and 3C, a horizontal axis indicates a time axis and a vertical axis indicates the filling amount (weight). Each of Figs. 3A, 3B and 3C shows shifting of the filling amount in one operation cycle in each mode. In Figs. 3A, 3B, and 3C, T1 indicates a period for which the cuts gates 2, 3 are in the state in which the objects of a large amount are supplied (large-amount supply period), T2 indicates a period for which the cuts gates 2, 3 are in the state in which the supply amount of the objects is decreased gradually (supply-amount gradual decrease period), T3 indicates a period for which the cuts gates 2, 3 are in the state in which the objects of a small amount are supplied (small-amount supply period), T4 indicates a stabilization wait period required to weigh a final filling amount (period required to stabilize the output signal of the load cell), and T5 indicates a period for which the discharge gates 12a, 12b of the weighing hopper Mw are opened (discharge period).

Among the respective modes, mainly, values or the like of parameters relating to an opening degree θ of the cut gates 2, 3, first and second predetermined weight values W1, W2, a supply stop weight value W3, etc., as described below, are merely different. Therefore, the operation common to these modes will be firstly described. Here, it is assumed that the objects are sequentially supplied to the supply device Ms from above the tubular body 1 to supply sufficient make-up objects corresponding to a discharge amount. The opening degree θ of the cut gates 2, 3 refers to an angle formed between a virtual axis A1 (Fig. 1B) and a virtual axis A2 (Fig. 1B) when the virtual axis A1 and the virtual axis A2 correspond to the cut gates 2, 3, respectively, extend vertically in parallel with each other in the state in which the cut gates 2, 3 are fully (completely) closed, and are rotatable together with the cut gates 2, 3, respectively. The opening degree θ corresponding to the fully closed state is 0 degree.

When the user selects (sets) a desired operation mode using the operation unit 52 to start running of the weighing apparatus, the control unit 51 promptly opens the cut gates 2, 3 to start supply of the objects from the supply device Ms to the weighing hopper Mw. The large-amount supply period T is defined as a period from when the supply of the objects starts until the filling amount reaches the first predetermined weight value W1 (W1a, W1b, W1c). For the large-amount supply period T, the control unit 51 maintains the opening degree θ of the cut gates 2, 3 at a first predetermined angle θ_{B}.

After the filling amount reaches the first predetermined weight value W1 (W1a, W1b, W1c), the control unit 51 controls the cut gates 2, 3 such that the opening degree θ of the cut gates 2, 3 is gradually decreased from the first predetermined angle θ_{B} to a second predetermined angle θ_{S} according to an increase6 in the filling amount. The control unit 51 performs this control based on a predetermined algorithm such that the opening degree θ of the cut gates 2, 3 becomes the second predetermined angle θ_{S} when the filling amount reaches the second predetermined weight value W2 (W2a, W2b, W2c). The supply-amount gradual decrease period T2 is defined as a period from when the filling amount reaches the first predetermined weight value W1 (W1a, W1b, W1c) until the filling amount reaches the second predetermined weight value W2 (W2a, W2b, W2c).

Thereafter, when the filling amount reaches the second predetermined weight value W2 (W2a, W2b, W2c), the control unit 51 maintains the opening degree θ of the cut gates 2, 3 at the second predetermined angle θ_{S}. When the filling amount reaches the supply stop weight value W3 (W3a, W3b, W3c) which is a value derived by subtracting a drop amount set value (predetermined value) from a target weight value Wt, the control unit 51 fully closes the cut gates 2, 3 (fully closed state). The small-amount supply period T3 is defined as a period from when the filling amount reaches the second predetermined weight value W2 (W2a, W2b, W2c) until the cut gates 2, 3 are fully closed. The supply stop weight values W3a, W3b, W3c in the respective modes are not illustrated in the drawings. The supply stop weight value W3a in the standard mode satisfies W2a < W3a < Wt. The supply stop weight value W3b in the high-accuracy mode satisfies W2b < W3b < Wt. The supply stop weight value W3c in the high-speed mode satisfies W2c < W3c < Wt. These values are decided so that the final filling amount after the cut gates 2, 3 enter the fully closed state reaches the target weight value Wt.

When the stabilization wait period T4 (e.g., period set as predetermined time) passes after the cut gates 2, 3 are fully closed to enter the fully closed state, the control unit 51 opens the discharge gates 12a, 12b to discharge the objects from the weighing hopper Mw (discharge period T5). Just after this discharge period T5, the control unit 51 closes the discharge gates 12a, 12b. At the same time as the closing of the discharge gates 12a, 12b, the control unit 51 opens the cut gates 2, 3 and enters a next large-amount supply period (T1). Thereafter, the same operation is repeated under control executed by the control unit 51.

The objects discharged from the weighing hopper Mw are supplied to the packaging machine via, for example, a funnel (not shown) and charged into the bag. In this case, the control unit 51 may open the discharge gates 12a, 12b to discharge the objects from the weighing hopper Mw, when the control unit 51 confirms that it receives a discharge permission signal from the packaging machine after the stabilization wait period T4 passes.

An operation test of the present weighing apparatus (test apparatus) was conducted. In this operation test, the weighing apparatus was run to perform weighing 30 times in succession in the respective modes under the conditions in which the target weight value Wt was set to 25000g, and the resin pellets were used as the objects. The values relating to the parameters in the respective modes in this operation test were set as follows.

In the present weighing apparatus (test apparatus), in the three operation modes, required time of the stabilization wait period T4 was set to the same time, i.e., 0.4 second, and required time of the discharge period T5 was set to the same time, i.e., 0.4 second.

In a case where the standard mode was selected, for example, the opening degree θ_{B} of the cut gates 2, 3 in the large-amount supply period T1 was set to 29.3 degrees, the first predetermined weight value W1a of the objects filled in the large-amount supply period T1 was set to 9450g, the second predetermined weight value W2a of the objects filled in the large-amount supply period T1 and the supply-amount gradual decrease period T2 was set to 23750g, and the opening degree θs of the cut gates 2, 3 in the small-amount supply period T3 was set to 10.1 degrees, and the supply stop weight value W3a at which the cut gates 2, 3 started to be fully closed was set to 24900g. When the weighing apparatus was run to perform weighing 30 times in succession under this setting, average required time of the large-amount supply period T1 was 0.69 second, average required time of the supply-amount gradual decrease period T2 was 0.67 second, average required time of the small-amount supply period T3 was 0.86 second, and supply operation time (total of the average required time of the periods T1 to T3) was 2.22 seconds. An operation cycle TC1 which is a sum of the supply operation time, the stabilization wait period T4, and the discharge period T5 was 3.02 seconds and a weighing speed was about 1192 times per hour. In this case, a difference (= maximum supply amount minus minimum supply amount) in the amount of the objects supplied to the weighing hopper Mw was 25g. From this, accuracy which was about ± 15 to 20g could be realized, when an allowance was added.

In a case where the high-accuracy mode was selected, for example, the opening degree θ_{B} of the cut gates 2, 3 in the large-amount supply period T1 was set to 28.4 degrees, the first predetermined weight value W1b of the objects filled in the large-amount supply period T1 was set to 13000g, the second predetermined weight value W2b of the objects filled in the large-amount supply period T1 and the supply-amount gradual decrease period T2 was set to 21600g, and the opening degree θ_{S} of the cut gates 2, 3 in the small-amount supply period T3 was set to 8.6 degrees, and the supply stop weight value W3b at which the cut gates 2, 3 started to be fully closed was set to 24900g. When the weighing apparatus was run to perform weighing 30 times in succession under this setting, average required time of the large-amount supply period T1 was 0.89 second, average required time of the supply-amount gradual decrease period T2 was 0.40 second, average required time of the small-amount supply period T3 was 1.88 seconds, and supply operation time was 3.17 seconds. An operation cycle TC2 which is a sum of the supply operation time, the stabilization wait period T4, and the discharge period T5 was 3.97 seconds and a weighing speed was about 907 times per hour. In this case, a difference (= maximum supply amount minus minimum supply amount) in the amount of the objects supplied to the weighing hopper Mw was 15g. From this, accuracy which was about ± 10g could be realized, when an allowance was added.

In a case where the high-speed mode was selected, for example, the opening degree θ_{B} of the cut gates 2, 3 in the large-amount supply period T1 was set to 32.9 degrees, the first predetermined weight value W1c of the objects filled in the large-amount supply period T1 was set to 15000g, the second predetermined weight value W2c of the objects filled in the large-amount supply period T1 and the supply-amount gradual decrease period T2 was set to 23500g, and the opening degree θ_{S} of the cut gates 2, 3 in the small-amount supply period T3 was set to 9.0 degrees, and the supply stop weight value W3c at which the cut gates 2, 3 started to be fully closed was set to 24900g. When the weighing apparatus was run to perform weighing 30 times in succession under this setting, average required time of the large-amount supply period T1 was 0.72 second, average required time of the supply-amount gradual decrease period T2 was 0.20 second, average required time of the small-amount supply period T3 was 0.20 second, and supply operation time was 1.12 seconds. An operation cycle TC3 which is a sum of the supply operation time, the stabilization wait period T4, and the discharge period T5 was 1.92 seconds and a weighing speed was about 1875 times per hour. In this case, a difference (= maximum supply amount minus minimum supply amount) in the amount of the objects supplied to the weighing hopper Mw was 50g. From this, accuracy which was about ± 30g could be realized, when an allowance was added.

The values of the opening degrees θ_{B}, θ_{S}, or the like, of the cut gates 2, 3 in the respective operation modes are exemplary. They are set and changed according to characteristics or the like, of the objects.

As described above, the opening degree θ_{S} of the cut gates 2, 3 is set smaller to make the size of the supply port SO smaller in the small-amount supply period T3 in the high-accuracy mode, than in the standard mode. In addition, time taken for the small-amount supply period T3 is set longer in the high-accuracy mode than in the standard mode. In this way, the supply flow rate in a final stage of the supply of the objects can be reduced, and thus weighing accuracy can be improved.

The opening degree θ_{B} of the cut gates 2, 3 is set larger to make the size of the supply port SO larger in the large-amount supply period T1 in the high-speed mode than in the standard mode. This makes it possible to easily reduce the supply operation time (total of the average required time in the periods T1 to T3), and reduce the operation cycle.

In other words, the weighing accuracy is higher but the operation speed is lower in the high-accuracy mode than in the standard mode, while the operation speed is higher but the weighing accuracy is lower in the high-speed mode than in the standard mode.

In the present embodiment, the weighing apparatus has the three operation modes for the objects of the same kind, one of the three operation modes can be selected and the weighing apparatus can be operated in the selected operation mode. Therefore, the weighing apparatus is able to easily perform an operation with a different ability even in a case where the objects of the same kind has the same target weight value. For example, in a case where it becomes necessary to increase the processing speed in a state in which the weighing apparatus is normally operated in the standard mode, the weighing apparatus may be operated in the high-speed mode. Or, in a case where the weighing accuracy should be improved, the weighing apparatus may be operated in the high-accuracy mode. Although in the present embodiment, the weighing apparatus is configured to have the three operation modes for the objects of the same kind, it may be configured to have two or four or more operation modes. Thus, the user can select a desired operation mode, and the weighing apparatus can operate in the selected operation mode, so long as it is configured to have a plurality of (i.e., two or more) operation modes.

In addition, in the present embodiment, the user of the weighing apparatus can select a desired operation mode from among the plurality of operation modes, using the operation unit 52. Thus, the desired operation mode can be easily selected.

Further, in the present embodiment, since the cut gate 2 has the hollow portion 2C formed by cutting, the supply flow rate of the objects supplied from the supply device Ms to the weighing hopper Mw, in the final stage (small-amount supply period T3) can easily reach a desired flow rate. Also, since the hollow portion 2C is configured to have the width which is decreased from the width which is substantially equal to the width (inner diameter of the tubular body 1) of the opening 1a at the lower end of the tubular body 1, as it extends in the direction opposite to the closing direction of the cut gate 2, the pair of cut gates 2, 3 can smoothly perform the operation (e.g., operation in supply-amount gradual decrease period T2) from a large opening degree state to a small opening degree state. For this purpose, the maximum width (maximum dimension in the direction of the arrow e of Fig. 2D) of the hollow portion 2C may be equal to the width (inner diameter of the tubular body 1) of the opening 1a at the lower end of the tubular body 1, or may be slightly smaller or larger than the width of the opening 1a. Although the cut-out portion (portion hatched by broken lines of Fig. 2D) of the hollow portion 2C has a trapezoidal shape, it may have a triangular shape, a circular-arc shape, or other shape.

Furthermore, in the present embodiment, the user can set the desired target weight value Wt by operating the operation unit 52. The control unit 51 is configured to set the parameters therein and control the weighing apparatus, according to the set target weight value Wt and the selected operation mode. Specifically, if the target weight value Wt is different even when the same operation mode is selected, the control unit 51 controls the weighing apparatus using different parameters. The parameters to be used may be selected from among the parameters which are pre-stored, or may be calculated based on predetermined computing equations. The control unit 51 and the operation unit 52 may be configured as an integrated device (operation/control unit).

Although in the present embodiment, the two cut gates 2, 3 which rotate in the opposite directions are used as the opening and closing mechanism of the supply device Ms, a conventional weighing apparatus called a packer scale mainly uses one cut gate. In the case of using one cut gate, the time required for the opening and closing operation when the opening operation or the like is performed cannot be reduced. Thus, there is a limit on reduction of the supply operation time which is required to supply the objects from the supply device Ms to the weighing hopper Mw once and improvement of a processing ability (processing speed). In contrast, in the present embodiment, by using the two cut gates 2, 3 which rotate in the opposite directions, a distance for which each of the cut gates 2, 3 is moved to perform the opening and closing operation can be about 1/2 of a distance for which one cut gate is moved to perform the opening and closing operation, in the case of using one cut gate. This can reduce the time required for the opening and closing operation. In the high-speed mode, the supply operation time required for supplying the objects once can be reduced. As a result, the processing ability can be made approximately twice or more than twice.

Moreover, in a case where the filling amount is controlled to reach the target weight value merely by adjusting the opening degree of one cut gate, there is a limit on improvement of the weighing accuracy. In contrast, in the present embodiment, by providing the hollow portion 2C in at least one of the two cut gates 2, 3 to decrease the supply flow rate of the objects in a quadratic curve, the effect of gradually decreasing the supply flow rate of the objects is attained, and thus a high weighing accuracy is achieved, even when the cut gates 2, 3 are shifted from the open state to the closed state in a short time.

As described above, in the present embodiment, since the two cut gates 2, 3 which rotate in the opposite directions are used, and the hollow portion 2C is provided in at least one of the two cut gates 2, 3 to decrease the supply flow rate of the objects in a quadratic curve, the processing ability and the weighing accuracy can be improved. Thus, a higher processing ability and a higher accuracy can be realized.

Although in the present embodiment, one load cell supports the side surface of the weighing hopper Mw in a cantilever manner, the present invention is not limited to this. For example, a plurality of load cells may support the weighing hopper Mw such that the weighing hopper Mw is suspended from the load cells.

Although in the present embodiment, the weighing apparatus is configured such that the objects discharged from the supply device Ms are supplied to the weighing hopper Mw, the present invention is not limited to this. For example, the weighing apparatus may be configured such that the objects discharged from the supply device Ms are supplied to the bag via the funnel and a weighing means which weighs the objects supplied to the bag held in a fixed state are provided.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention.

### Industrial Applicability

The present invention is useful as a weighing apparatus, etc., which is able to easily perform an operation with a different ability in a case where the objects of the same kind has the same target weight value.

### Reference Signs List

- Ms: supply device
- Mw: weighing hopper
- SO: supply port
- 1: tubular body
- 1a: opening at lower end of tubular body
- 2, 3: cut gate
- 2B, 3B: bottom portion of cut gate
- 2Bf, 3Bf: front edge of cut gate in closing direction
- 2C: hollow portion
- 12a, 12b: discharge gate of weighing hopper
- 13: load cell
- 51: control unit
- 52: operation unit
- T1: large-amount supply period
- T2: supply-amount gradual decrease period
- T3: small-amount supply period

## Claims

1. A weighing apparatus comprising:
a supply means (Ms) including a tubular body (1) which extends vertically and is filled with objects comprising powdered or granular products;
a pair of cut gates (2, 3) which are used to open and close an opening at a lower end of the tubular body and rotate in opposite directions when the pair of cut gates are opened and closed, the supply means being configured to drop the objects filled in the tubular body (1) by their own weight from a supply port defined by the pair of cut gates and the opening, when opening the pair of cut gates;
a weighing means (Mw) which is supplied with the objects dropped from the supply means and weighs the supplied objects;
**characterised in that** the supply means further comprises
a control unit (51) for controlling opening and closing operation of the pair of cut gates (2, 3)based on a weight of the objects weighed by the weighing means so that the objects of a preset target weight value are supplied from the supply means to the weighing means (Mw);
wherein the control unit (51) has a plurality of operation modes including a first mode and a second mode for the objects of the same kind, the opening and closing operation of the pair of cut gates (2, 3) for supplying the objects of the target weight value from the supply means to the weighing means (Mw) being made different among the plurality of operation modes;
the control unit (51) is configured to control the opening and closing operation of the pair of cut gates (2, 3) based on the operation mode selected from among the plurality of operation modes; and
the control unit (51) is configured to control the opening and closing operation of the pair of cut gates such that supply operation time which is time from when the pair of cut gates start to open to supply the objects of the target weight value from the supply means to the weighing means until the pair of cut gates are completely closed, is shorter when the second mode is selected than when the first mode is selected.

2. The weighing apparatus according to claim 1,
wherein the control unit (51) is configured to control the opening and closing operation of the pair of cut gates (2, 3) such that each of the operation modes has:
a large-amount supply period (T1) for which the pair of cut gates are opened with a large opening degree such that a size of the supply port of the supply means is a first predetermined size and a state in which the cut gates (2, 3) are opened with the large opening degree is maintained, for a specified time, when the supply means (Ms) starts to supply the objects to the weighing means (Mw);
a supply-amount gradual decrease period (T2) which is subsequent to the large-amount supply period and for which the pair of cut gates are gradually moved so as to be closed with an increase in the weight of the objects weighed by the weighing means (Mw), until the size of the supply port of the supply means (Ms) is changed from the first size to a second predetermined size which is smaller than the first size; and
a small-amount supply period (T3) which is subsequent to the supply-amount gradual decrease period and for which a state in which the pair of cut gates are opened with a small opening degree such that the size of the supply port of the supply means is the second size, is maintained for a specified time, and the pair of cut gates are closed when the weight of the objects weighed by the weighing means (Mw) matches a predetermined supply stop weight value which is smaller than the target weight value; and
the control unit (51) is configured to control the opening and closing operation of the pair of cut gates (2, 3) such that the size of the supply port is larger for the large-amount supply period, when the second mode is selected than when the first mode is selected.

3. The weighing apparatus according to claim 2,
wherein the plurality of operation modes include a third mode; and
the control unit (51) is configured to control the opening and closing operation of the pair of cut gates (2, 3) such that the size of the supply port is smaller for the small-amount supply period (T2), and time taken for the small-amount supply period is longer, when the third mode is selected than when the first mode is selected.

4. The weighing apparatus according to any one of claims 1 to 3,
wherein a front edge of at least one of the pair of cut gates (2, 3) in a closing direction is provided with a hollow portion formed by cutting, the hollow portion having a width which is decreased from the front edge, as the hollow portion extends in a direction opposite to the closing direction.

5. The weighing apparatus according to claim 4,
wherein the hollow portion is configured such that its width is decreased from a width which is substantially equal to a width of the opening at the lower end of the tubular body (1) in a direction perpendicular to the closing direction, as the hollow portion extends in the direction opposite to the closing direction.

6. The weighing apparatus according to any one of claims 1 to 3, further comprising:
a mode selecting operation means which is operated to select the operation mode from among the plurality of operation modes;
wherein the control unit (51) is configured to control the opening and closing operation of the pair of cut gates (2, 3) based on the operation mode selected by the mode selecting operation means.

## Patentansprüche

1. Wägevorrichtung, die Folgendes aufweist:
ein Zufuhrmittel (Ms) mit einem rohrförmigen Körper (1), der vertikal verläuft und mit Pulver- oder Granulatprodukten umfassenden Gegenständen gefüllt ist;
ein Paar Absperrschieber (2, 3), die zum Öffnen und Schließen einer Öffnung an einem unteren Ende des rohrförmigen Körpers verwendet werden und sich in entgegengesetzte Richtungen drehen, wenn das Absperrschieberpaar geöffnet und geschlossen wird, wobei das Zufuhrmittel angeordnet ist, um die in den rohrförmigen Körper (1) gefüllten Gegenstände durch ihr eigenes Gewicht aus einem von dem Absperrschieberpaar und der Öffnung definierten Zufuhrdurchgang fallen zu lassen, wenn das Absperrschieberpaar geöffnet wird;
ein Wägemittel (Mw), dem die Gegenstände zugeführt werden, die aus dem Zufuhrmittel fallengelassen werden, und das die zugeführten Gegenstände wiegt;
**dadurch gekennzeichnet, dass** das Zufuhrmittel ferner Folgendes aufweist
eine Steuereinheit (51) zum Steuern des Öffnungs- und Schließvorgangs des Absperrschieberpaares (2, 3) auf Basis eines Gewichts der von dem Wägemittel gewogenen Gegenstände, so dass die Gegenstände eines voreingestellten Sollgewichtwerts dem Wägemittel (Mw) aus dem Zufuhrmittel zugeführt werden;
wobei die Steuereinheit (51) mehrere Betriebsmodi hat, die einen ersten und einen zweiten Modus für die Gegenstände der gleichen Art enthalten, wobei der Öffnungs- und Schließvorgang des Absperrschieberpaares (2, 3) zum Zuführen der Gegenstände des Sollgewichtswerts aus dem Zufuhrmittel zu dem Wägemittel (Mw) unter den mehreren Betriebsmodi verschieden gemacht ist;
die Steuereinheit (51) angeordnet ist, um den Öffnungs- und Schließvorgang des Absperrschieberpaares (2, 3) auf Basis des unter den mehreren Betriebsmodi ausgewählten Betriebsmodus zu steuern; und
die Steuereinheit (51) angeordnet ist, um den Öffnungs- und Schließvorgang des Absperrschieberpaares so zu steuern, dass die Zufuhrbetriebszeit, die eine Zeit ab Beginn des Öffnens des Absperrschieberpaares zum Zuführen der Gegenstände des Sollgewichtswertes aus dem Zufuhrmittel zum Wägemittel bis zum vollständigen Schließen des Absperrschieberpaares ist, kürzer ist, wenn der zweite Modus ausgewählt ist, als wenn der erste Modus ausgewählt ist.

2. Wägevorrichtung nach Anspruch 1,
wobei die Steuereinheit (51) angeordnet ist, um den Öffnungs- und Schließvorgang des Absperrschieberpaares (2, 3) so zu steuern, dass jeder der Betriebsmodi Folgendes hat:
eine Großmengenzufuhrdauer (T1), für die das Absperrschieberpaar mit einem großen Öffnungsgrad geöffnet ist, so dass eine Größe des Zufuhrdurchgangs des Zufuhrmittels eine erste vorbestimmte Größe ist und ein Zustand, in dem die Absperrschieber (2, 3) mit dem großen Öffnungsgrad geöffnet sind, für eine vorgegebene Zeit beibehalten wird, wenn das Zufuhrmittel (Ms) mit dem Zuführen der Gegenstände zum Wägemittel (Mw) beginnt;
eine Dauer der allmählichen Verringerung der Zufuhrmenge (T2), die an die Großmengenzufuhrdauer anschließt und für welche das Absperrschieberpaar mit einer Zunahme des Gewichts der durch das Wägemittel (Mw) gewogenen Gegenstände allmählich bewegt wird, um geschlossen zu werden, bis die Größe des Zufuhrdurchgangs des Zufuhrmittels (Ms) von der ersten Größe auf eine zweite, vorbestimmte Größe, die kleiner als die erste Größe ist, geändert wird; und
eine Kleinmengenzufuhrdauer (T3), die an die Dauer der allmählichen Verringerung der Zufuhrmenge anschließt und für die ein Zustand, in dem das Absperrschieberpaar mit einem kleinen Öffnungsgrad geöffnet ist, so dass die Größe des Zufuhrdurchgangs des Zufuhrmittels die zweite Größe ist, für eine vorgegebene Zeit beibehalten wird und das Absperrschieberpaar geschlossen wird, wenn das Gewicht der durch das Wägemittel (Mw) gewogenen Gegenstände mit einem vorbestimmten Zufuhrstoppgewichtswert, der kleiner als der Sollgewichtswert ist, übereinstimmt; und
die Steuereinheit (51) angeordnet ist, um den Öffnungs- und Schließvorgang des Absperrschieberpaares (2, 3) so zu steuern, dass die Größe des Zufuhrdurchgangs für die Großmengenzufuhrdauer größer ist, wenn der zweite Modus ausgewählt ist, als wenn der erste Modus ausgewählt ist.

3. Wägevorrichtung nach Anspruch 2,
wobei die mehreren Betriebsmodi einen dritten Modus enthalten; und
die Steuereinheit (51) angeordnet ist, um den Öffnungs- und Schließvorgang des Absperrschieberpaares (2, 3) so zu steuern, dass die Größe des Zufuhrdurchgangs für die Kleinmengenzufuhrdauer (T2) kleiner ist und die für die Kleinmengenzufuhrdauer benötigte Zeit länger ist, wenn der dritte Modus ausgewählt ist, als wenn der erste Modus ausgewählt ist.

4. Wägevorrichtung nach einem der Ansprüche 1 bis 3,
wobei eine Vorderkante von wenigstens einem des Absperrschieberpaares (2, 3) in einer Schließrichtung mit einem durch Aussparen gebildeten Hohlteil versehen ist, wobei der Hohlteil eine Breite hat, die im Verlauf des Hohlteils in einer zur Schließrichtung entgegengesetzten Richtung ab der Vorderkante abnimmt.

5. Wägevorrichtung nach Anspruch 4,
wobei der Hohlteil so angeordnet ist, dass seine Breite von einer Breite, die im Wesentlichen gleich einer Breite der Öffnung am unteren Ende des rohrförmigen Körpers (1) in einer zur Schließrichtung senkrechten Richtung ist, im Verlauf des Hohlteils in der zur Schließrichtung entgegengesetzten Richtung abnimmt.

6. Wägevorrichtung nach einem der Ansprüche 1 bis 3, die ferner Folgendes aufweist:
ein Modusauswahlbedienmittel, das bedient wird, um den Betriebsmodus unter den mehreren Betriebsmodi auszuwählen;
wobei die Steuereinheit (51) zum Steuern des Öffnungs- und Schließvorgangs des Absperrschieberpaares (2, 3) auf Basis des durch das Modusauswahlbedienmittel ausgewählten Betriebsmodus angeordnet ist.

## Revendications

1. Appareil de pesée comprenant :
un moyen d'alimentation (Ms) incluant un corps tubulaire (1) qui s'étend verticalement et est rempli d'objets comprenant des produits pulvérulents ou granulaires ;
une paire de portes de coupure (2, 3) qui sont utilisées pour ouvrir et fermer une ouverture au niveau d'une extrémité inférieure du corps tubulaires et tourner dans des directions opposées lorsque la paire de portes de coupure est ouverte et fermée, le moyen d'alimentation étant configuré pour faire chuter les objets remplis dans le corps tubulaire (1) par leur propre poids à partir d'un orifice d'alimentation défini par la paire de portes de coupure et l'ouverture, lors de l'ouverture de la paire de portes de coupure ;
un moyen de pesée (Mw) qui est alimenté en objets ayant chuté à partir du moyen d'alimentation et pèse les objets alimentés ;
**caractérisé en ce que** le moyen d'alimentation comprend en outre
une unité de commande (51) pour commander une opération d'ouverture et de fermeture de la paire de portes de coupure (2, 3) sur la base d'un poids des objets pesés par le moyen de pesée de sorte que les objets d'une valeur de poids cible prédéterminée soient alimentés à partir du moyen d'alimentation dans le moyen de pesée (Mw) ;
dans lequel l'unité de commande (51) présente une pluralité de modes d'opération incluant un premier mode et un deuxième mode pour les objets du même type, l'opération d'ouverture et de fermeture de la paire de portes de coupure (2, 3) pour l'alimentation des objets de la valeur de poids cible à partir du moyen d'alimentation dans le moyen de pesée (Mw) étant amenée à être différente parmi la pluralité de modes d'opération ;
l'unité de commande (51) est configurée pour commander l'opération d'ouverture et de fermeture de la paire de portes de coupure (2, 3) sur la base du mode d'opération sélectionné parmi la pluralité de modes d'opération ; et
l'unité de commande (51) est configurée pour commander l'opération d'ouverture et de fermeture de la paire de portes de coupure de sorte que la durée d'opération d'alimentation qui est la durée allant du début d'ouverture de la paire de portes de coupure pour l'alimentation des objets de la valeur de poids cible à partir du moyen d'alimentation dans le moyen de pesée à la fermeture complète de la paire de portes de coupure soit inférieure lorsque le deuxième mode est sélectionné à lorsque le premier mode est sélectionné.

2. Appareil de pesée selon la revendication 1,
dans lequel l'unité de commande (51) est configurée pour commander l'opération d'ouverture et de fermeture de la paire de portes de coupure (2, 3) de sorte que chacun des modes d'opération présente :
une période d'alimentation de grande quantité (T1) pour laquelle la paire de portes de coupure est ouverte selon un degré d'ouverture important de sorte qu'une taille de l'orifice d'alimentation du moyen d'alimentation soit une première taille prédéterminée et un état dans lequel les portes de coupure (2, 3) sont ouvertes selon le degré d'ouverture important soit maintenu, pendant une durée spécifique, lorsque le moyen d'alimentation (Ms) commence à alimenter les objets dans le moyen de pesée (Mw) ;
une période de réduction progressive de quantité d'alimentation (T2) qui est ultérieure à la période d'alimentation de grande quantité et pour laquelle la paire de portes de coupure est progressivement déplacée de manière à être fermée avec une augmentation du poids des objets pesés par le moyen de pesée (Mw), jusqu'à ce que la taille de l'orifice d'alimentation du moyen d'alimentation (Ms) soit modifiée de la première taille à une seconde taille prédéterminée qui est inférieure à la première taille ; et
une période d'alimentation de petite quantité (T3) qui est ultérieure à la période de réduction progressive de quantité d'alimentation et pour laquelle un état dans lequel la paire de portes de coupure est ouverte selon un faible degré d'ouverture de sorte que la taille de l'orifice d'alimentation du moyen d'alimentation soit la seconde taille, est maintenu pendant une durée spécifique, et la paire de portes de coupure est fermée lorsque le poids des objets pesés par le moyen de pesée (Mw) correspond à une valeur de poids d'arrêt d'alimentation prédéterminée qui est inférieure à la valeur de poids cible ; et
l'unité de commande (51) est configurée pour commander l'opération d'ouverture et de fermeture de la paire de portes de coupure (2, 3) de sorte que la taille de l'orifice d'alimentation soit supérieure pour la période d'alimentation de grande quantité lorsque le second mode est sélectionné à lorsque le premier mode est sélectionné.

3. Appareil de pesée selon la revendication 2,
dans lequel la pluralité de modes d'opération inclut un troisième mode ; et
l'unité de commande (51) est configurée pour commander l'opération d'ouverture et de fermeture de la paire de portes de coupure (2, 3) de sorte que la taille de l'orifice d'alimentation soit inférieure pour la période d'alimentation de petite quantité (T2), et la durée de la période d'alimentation de petite quantité est supérieure lorsque le troisième mode est sélectionné à lorsque le premier mode est sélectionné.

4. Appareil de pesée selon l'une quelconque des revendications 1 à 3,
dans lequel un bord avant d'au moins l'une de la paire de portes de coupure (2, 3) dans une direction de fermeture est doté d'une partie creuse formée par coupe, la partie creuse présentant une largeur qui est réduite à partir du bord avant, lorsque la partie creuse s'étend dans une direction opposée à la direction de fermeture.

5. Appareil de pesée selon la revendication 4,
dans lequel la partie creuse est configurée de sorte que sa largeur soit réduite à partir d'une largeur qui est sensiblement égale à une largeur de l'ouverture au niveau de l'extrémité inférieure du corps tubulaire (1) dans une direction perpendiculaire à la direction de fermeture, lorsque la partie creuse s'étend dans la direction opposée à la direction de fermeture.

6. Appareil de pesée selon l'une quelconque des revendications 1 à 3, comprenant en outre :
un moyen d'opération de sélection de mode qui est actionné pour sélectionner le mode d'opération parmi la pluralité de modes d'opération,
dans lequel l'unité de commande (51) est configurée pour commander l'opération d'ouverture et de fermeture de la paire de portes de coupure (2, 3) sur la base du mode d'opération sélectionné par le moyen d'opération de sélection de mode.
